# EUROPEAN PATENT APPLICATION

(11) **EP 1 990 081 A2**
(43) Date of publication of application: **12.11.2008**
(21) Application number: 07107598.0
(22) Date of filing: 07.05.2007
(51) Int. Cl.: B01D 53/94, B01J 23/63, B01J 35/04, B01J 37/02, B01J 37/08

(54) **LNT catalyst and process for the production thereof**

(71) Applicant: Ford Global Technologies, LLC, Dearborn, MI 48126 (US)
(72) Inventor: Carberry, Brendan, 52074, Aachen (DE); Chigapov, Albert, 52072 Aachen (DE)
(74) Representative: Drömer, Hans-Carsten

(57) **Abstract**

The invention concerns a LNT catalyst for a NOₓ storage catalyst comprising a platinum group metal component and a metal oxide component, wherein the metal oxide component contains exclusively praseodymium oxide (Pr₆O₁₁) or praseodymium-lanthanum oxide. The invention further concerns a process for the production of a LNT catalyst comprising a platinum group metal component and a metal oxide component, wherein high-temperature calcination of the metal oxide component is effected prior to addition of the platinum group metal component.

## Description

The present invention concerns a LNT catalyst and process for the production thereof.

A large number of publications in the state of the art, for example WO 2005/075059 A1, EP 1 147 802 B1, WO 02/22241 A1 and US No 2004/0048741 A1 disclose the production of a LNT catalyst (LNT = lean NOₓ trap) which contain barium (Ba) and/or cerium (Ce) and/or rhodium (Rh). In addition WO 2004/060541 and EP 1 685 891 A1 also disclose catalysts with praseodymium oxide in combination with further components, basically with cerium oxide.

Apart from the fact that the use of the materials employed in conventional catalysts such as for example rhodium and platinum is expensive (the price per troy ounce, corresponding to about 31.103 g, in August 2006, was US $ 1235 for platinum and US $ 4650 for rhodium), the conventional catalysts suffer from the further disadvantage that they have only a low level of activity or no activity at low temperatures in terms of NOₓ conversion so that temperatures in the range of 250°C and above are required for effective NOₓ conversion. Such temperatures however exceed the exhaust gas temperatures which usually occur in a diesel engine.

The object of the present invention is to provide an alternative LNT catalyst and a process for the production thereof which, while avoiding barium and cerium compounds, has sufficient activity in respect of nitrogen oxide conversion even at the low exhaust gas temperatures which a typical with diesel engines.

That object is attained in accordance with the features of independent claim 1 and independent claim 6.

A LNT catalyst according to the invention for a NOₓ storage catalyst, comprising a platinum group metal component and a metal oxide component, is characterised in that the metal oxide component contains exclusively praseodymium oxide (Pr₆O₁₁) or praseodymium lanthanum mixed oxide.

In accordance with the invention these novel mixtures of LNT catalysts have been developed for NOₓ storage without using barium or cerium. Those mixtures are based on praseodymium oxide or praseodymium lanthanum mixtures.

In the LNT catalysts according to the invention the problems which occur with commercially available Pt-Rh-Ba-Ce/aluminium oxide mixtures, namely thermal deactivation, high aggressiveness and corrosion action of the barium compounds, low melting points of the barium compounds, difficulties in terms of regeneration after sulphation under high temperature and incomplete recovery after sulphation, the solubility of barium in water leading to a gradual loss of activity and barium emissions and a low level of activity at low temperatures were avoided. In addition praseodymium or praseodymium lanthanum mixtures in contrast to barium compounds are not toxic, they are not water-soluble and they have very high respective melting points of substantially over 2000°C.

The mixturess according to the invention also do not have any cerium and do not require cerium to increase low-temperature activity. The presence of cerium in commercially available catalysts leads to an increase in the low-temperature activity but a worsening in the high-temperature performance and also leads to high peak temperatures during desulphation in lean-rich cycles, which is also avoided with the present invention.

Both praseodymium and also in particular lanthanum oxide contribute to increasing the thermal stability of the aluminium oxide. The inventive praseodymium (or praseodymium lanthanum)-based LNT catalysts combined with a noble metal component of Pt-Pd or Pt-Rh showed comparable or substantially improved properties in NOₓ reduction in the entire investigated temperature range in comparison to commercially available samples. A lower platinum loading by substitution of platinum with less expensive palladium and a non-existent or only low rhodium loading contribute to the cost reduction in the exhaust gas posttreatment arrangement (NOₓ storage-reduction catalyst).

In accordance with a further aspect the invention concerns a process for the production of a LNT catalyst comprising a platinum group metal component and a metal oxide component. That process is characterised in that high-temperature calcination of the metal oxide component is applied prior to the addition of the platinum group metal component.

The invention thus also provides a novel production process involving high-temperature calcination of the base oxide (preferably once again praseodymium or praseodymium lanthanum) prior to the addition of the noble metal component, thereby permitting the development of LNT catalysts with a high level of activity at temperatures in the range of 150°C to 200°C which is a typical temperature range for exhaust gases for diesel engines.

In that respect, in relation to the production process, the invention is based on the consideration that opposite influences apply in terms of activity at low temperatures insofar as base oxides for storing NOₓ in the form of nitrates are required and at the same time those oxides suppress the activity of the platinum in NO oxidation and NOₓ reduction, whereby low-temperature activity is reduced. In accordance with the invention samples were treated at high temperatures with a base oxide, whereby a good interaction or reaction with aluminium oxide was achieved.

In accordance with the invention cores from cordierite with washcoated alumina were first calcined with impregnated praseodymium nitrate or a mixture of praseodymium and lanthanum nitrate at a temperature of 900°C for a period of 1.5 hours. The core samples obtained in that case were colourless, wherein the dark-brown colour of the praseodymium oxide disappeared completely, which indicates a reaction with aluminium oxide, with the formation of PrAlO₃- or Pr(La)AlO₃-compounds. In that situation a large excess of citric acid was used. Aluminium oxide is soluble in citric acid so that citric acid provides a better interaction between aluminium oxide and the base oxide during impregnation. In the next step the noble metal component (or the noble metal components) was or were added, whereupon drying and final calcination was implemented. In that case no citric acid was used in order to avoid dissolution of the base oxide (Pr or Pr-La) interacted with alumina, instead of which urea was added in order to achieve homogeneous deposition of the noble metal component or components. Such an interaction with aluminium oxide resulted in a reduction in the level of conversion efficiency at high temperatures due to the weaker basic properties but afforded excellent activity at lower temperatures which was substantially above the level of activity of commercially available LNT samples.

Further configurations are to be found in the description and the appendant claims.

The invention is described in greater detail hereinafter by means of preferred embodiments by way of example and with reference to the accompanying Figures in which:
- Figure 1: shows typical NOₓ profiles (that is to say time dependencies in respect of the NOₓ concentration) which were obtained for operation with alternate lean-rich conditions,
- Figure 2: shows time dependencies in respect of NOₓ concentration which were obtained on a Pt-Rh/Ba-Ce reference sample ('reference A') at T= 200°C, for operation with alternate lean-rich conditions,
- Figure 3: shows time dependencies in respect of NOₓ concentration which were obtained on a Pt-Pd/praseodymium sample ('Example 1') at T = 200°C, for operation with alternate lean-rich conditions,
- Figure 4: shows time dependencies in respect of NOₓ concentration which were obtained on a Pt-Pd/Pr-La sample ('Example 2') at T = 250°C, for operation with alternate lean-rich conditions,
- Figure 5: shows time dependencies in respect of NOₓ concentration which were obtained on a Pt-Rh/Pr₆O₁₁ sample ('Example 3') at T = 150°C, for operation with alternate lean-rich conditions,
- Figure 6: shows the NOₓ conversion performance of LNT catalysts produced by means of the process according to the invention using a preliminary high-temperature calcination operation according to the invention, in comparison with commercially available catalysts, and

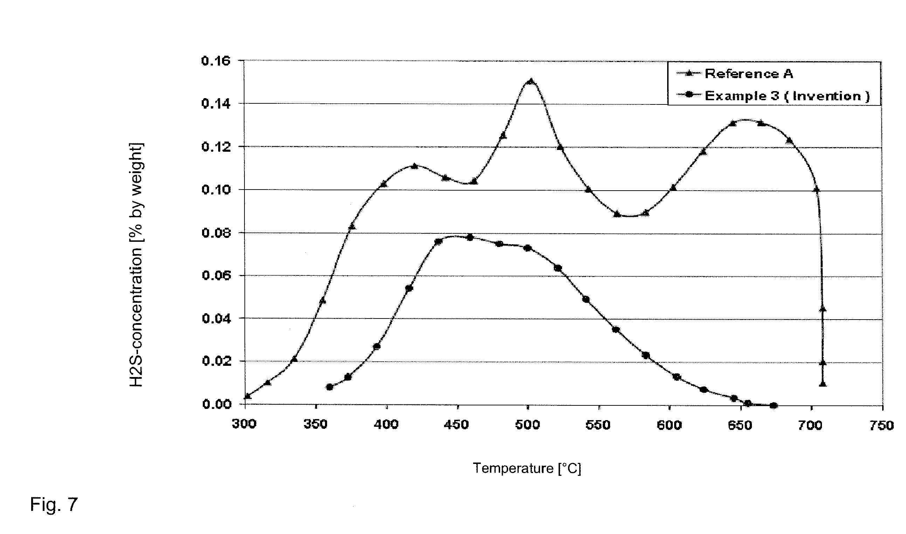

- Figure 7: shows a graph to represent desulphation of a Pt/Rh-praseodymium catalyst and a conventional Pt-Rh/Ba-Ce catalyst in a 5% H₂-He mixture.

### The preparation process for the individual samples was as follows:

All catalyst compounds were prepared on an aluminium-coated cordierite core substrates having a cell densitiy of 400 cpsi (= 'cells per square inch') with a 38% by weight aluminium loading, of a diameter of 1 inch and a length of 1.5 inches. For catalyst production the cores or substrates were impregnated with a solution which contained catalyst precursors, typically platinum, platinum-palladium or platinum-palladium-rhodium precursors, with citric acid or urea being added. The precursors contained platinum-tetraammine nitrate or hydroxide, palladium tetra ammine nitrate or rhodium nitrate, as well as nitrates of oxide components, for example praseodymium and lanthanum nitrate. The cores were dried at a temperature of 88°C overnight and finally calcined at a temperature of 600°C for a period of 2 hours.

Commercially available LNT catalysts were used as reference samples, more specifically:
- Reference sample A:: 100 platinum (Pt)/20 rhodium (Rh) and
- Reference sample B:: 100 platinum (Pt)/10 rhodium (Rh) and Pt/Pr-Ce .

In-house prepared Pt/Pr-Ce and Pt/Pr-Y catalysts were also used as reference samples.

### Example 1 (Pt-Pd/Pr₆O₁₁ catalyst):

The solution was prepared using 0.0680 g of tetraammine platinum (II) nitrate (with 49.9% by weight of platinum), 0.0685 g of tetraammine palladium nitrate (with 35.1% by weight of palladium), 0.66 g of praseodymium nitrate hexahydrate (with loading 1.5 mmol of Pr/core) and 0.57 g of citric acid in 2.2 g of distilled water and stirring at ambient temperature. The aluminium-coated cordierite was impregnated with that solution and dried at a temperature of 88°C for a period of 16 hours. The dried core sample was finally calcined at a temperature of 600°C for a period of 2 hours. The platinum loading was 0.034 g (corresponding to a Pt concentration of 50 g/ft³ ≈ 1.77 g/L of the filter volume) and the palladium loading was 0.024 g (corresponding to a Pd concentration of 35 g/ft³ ≈ 1.239 g/L of the filter volume).

### Example 2 (Pt-Pd/Pr-La-mixed oxide catalyst):

0.0680 g of tetraammine platinum (II) nitrate (with 49.9% by weight of platinum), 0.0685 g of tetraammine palladium nitrate (with 35.1% of palladium), 0.53 g of praseodymium nitrate hexahydrate (with loading 1.2 mmol of Pr core), 0.130 g of lanthanum nitrate hexahydrate (with loading 0.3 mmol of lanthanum) and 0.57 g of citric acid were dissolved in 2.2 g of distilled water by stirring at ambient temperature. The aluminium-coated cordierite was impregnated with that solution and dried at a temperature of 88°C for a period of 16 hours. The dried core sample was finally calcined at a temperature of 600°C for a period of 2 hours. The platinum loading was 0.034 g (corresponding to a Pt concentration of 50 g/ft³ ≈ 1.77 g/L of the filter volume) and the palladium loading was 0.024 g (corresponding to a Pd concentration of 35 g/ft³ ≈ 1.239 g/L of the filter volume).

### Example 3 (Pt-Rh/Pr₆O₁₁):

0.118 g of tetraammine platinum (II) nitrate (with 49.9% by weight of platinum), 0.005 g of rhodium nitrate (with 31.1% by weight of rhodium), 0.66 g of praseodymium nitrate-6-hydrate (with loading 1.5 mmol of Pr/core) and 0.57 g of citric acid were dissolved in 2.2 g of distilled water by stirring at ambient temperature. The aluminium-coated cordierite core of the dimensions 1 inch * 1.5 inch was then impregnated with that solution and dried at a temperature of 88°C for a period of 16 hours. The dried core sample was finally calcined at a temperature of 600°C for a period of 2 hours. The platinum loading was 0.058 g (corresponding to a Pt concentration of 85 g/ft³ ≈ 3.009 g/L of the filter volume) and the rhodium loading was 0.00155 g (corresponding to a Rh concentration of 2.3 g/ft³ ≈ 0.08142 g/L of the filter volume).

### Example 4 (Pt-Rh/Pr-La mixed oxide):

The sample was prepared just like the sample of Example 3 but in this case, instead of praseodymium nitrate, a mixture of 0.55 g of praseodymium nitrate and 0.13 g of lanthanum nitrate (with loading 1.2 mmol of Pr/core and 0.3 mmol of La/core) was added.

### Example 5 (Pt-Rh/Pr catalyst):

For an identical preparation 0.66 g of praseodymium nitrate and 1.07 g of citric acid were dissolved in 2.1 g of distilled water. The aluminium-coated core was then impregnated with that solution and dried at a temperature of 88°C for a period of 16 hours. The dried core sample was calcined at a temperature of 900°C for a period of 2 hours. The core was then impregnated with a solution which contained 0.1180 g of tetraammine platinum (II) nitrate (with 49.9% by weight of platinum), 0.005 g of rhodium nitrate (with by weight 31.1% of rhodium) and 0.3 g of urea. The core sample impregnated in that way was dried overnight in a closed container for a period of 16 hours and finally calcined at a temperature of 600°C for a period of 2 hours. The platinum loading was 0.058 g (corresponding to a Pt concentration of 85 g/ft³ ≈ 3.009 g/L of the filter volume), the palladium loading was 0.024 g (corresponding to a Pd concentration of 35 g/ft³ ≈ 1.239 g/L of the filter volume) and the rhodium loading was 0.00155 g corresponding to a Rh concentration of 2.3 g/ft³ ≈ 0.08142 g/L of the filter volume).

### Example 6 (Pt-Pd/Pr-La catalyst):

0.55g of praseodymium nitrate, 0.138 g of lanthanum nitrate and 1.07 g of citric acid were dissolved in 2.1 g of distilled water. The aluminium-coated core was then impregnated with that solution and dried at a temperature of 88°C for a period of 16 hours. The dried core sample was calcined at a temperature of 900°C for a period of 1.5 hours. The core was then impregnated with a solution which contained 0.0680 g of tetraammine platinum (II) nitrate (with 49.9% of platinum), 0.0685 g of tetraammine palladium nitrate (with 35.1% of palladium) and 0.3 g of urea. The impregnated core sample was then dried overnight in a closed container for a period of 16 hours and finally calcined at a temperature of 600°C for a period of 2 hours. The platinum loading was 0.034 g (corresponding to a Pt concentration of 50 g/ft³ ≈ 1.77 g/L of the filter volume) and the palladium loading was 0.024 g (corresponding to a Pd concentration 35 g/ft³ ≈ 1.239 g/L of the filter volume).

### Example 7 (Pt-Rh/Pr-La catalyst):

0.55g of praseodymium nitrate, 0.138 g of lanthanum nitrate and 1.07 g of citric acid were dissolved in 2.1 g of distilled water. The aluminium-coated core was then impregnated with that solution and dried at a temperature of 88°C for a period of 16 hours. The dried core sample was calcined at a temperature of 900°C for a period of 2 hours. The core was then impregnated with a solution which contained 0.1180 g of tetraammine platinum (II) nitrate (with 49.9% wt. of platinum), 0.005 g of rhodium nitrate (with 31.1% wt. of rhodium) and 0.3 g of urea. The impregnated core sample was then dried overnight in a closed container for a period of 16 hours and finally calcined at a temperature of 600°C for a period of 2 hours. The platinum loading was 0.034 g (corresponding to a Pt concentration of 50 g/ft³ ≈ 1.77 g/L of the filter volume) and the rhodium loading was 0.00155 g (corresponding to a Rh concentration 2.3 g/ft³ ≈ 0.08142 g/L of the filter volume).

### Reference samples:

The reference samples were prepared under the same preparation conditions and with the same chemicals as the sample of Example 1 but in the case of the reference samples yttrium or cerium nitrate or another nitrate were added. Optionally (that is to say for the 'platinum-only catalyst') a precursor containing exclusively platinum was used. The commercially available LNT catalysts with a loading of 100 Pt/20 Rh and 100 Pt/10 Rh (g/ft³) respectively were calcined under the same conditions, that is to say at a temperature of 600°C for a period of 2 hours.

### Test procedure:

All catalysts were tested in a laboratory-scale packed-bed flow reactor. An electric furnace was used to heat the reactor. The respective catalyst core sample together with two thermocouples (of which one was placed at a 5 mm in front of and the other 5 mm behind the sample) was arranged in the quartz tube. A conventional through-flow setup was used for the gas mixture preparation operation. All gases were of ultra-high purity. The water concentration in the gas line was precisely controlled by means of a gas humidifier. The through-flow rates were controlled by means of mass flow controllers. To avoid water condensation all connecting lines were mounted in a thermal box maintaining a constant temperature of 85°C. Gas components upstream and downstream fo the reactor were analysed by means of a HP 6890 A gas chromatograph and a NO/NOₓ analyser CLD-700 from Eco-physics was used for continuous NO and NOₓ measurement, by using the chemo luminescence method.

For the entire core samples investigated, a first pre-treatment under alternate lean/rich conditions at a temperature of 400°C for a period of 3 hours. In that case the core sample placed in the reactor was exposed to a lean reaction mixture for a period of 60 s whereupon the lean mixture was completely exchanged for a rich mixture for a period of 10 s. That cycle was repeated a number of times until a steady-state NOₓ conversion rate was achieved. The NOₓ conversion was calculated as the difference between the inlet-side NOₓ concentration and the outlet-side NOₓ concentration over at least 10 cycles under steady-state conditions. The two mixtures were supplied by two separate lines each equipped with a mass flow controller, the mixtures being alternated with each other automatically using computer control by means of a six-way valve.

In that case the conditions of the lean and rich mixtures respectively were as follows:
- Lean:: NOₓ-755 ppm (700 ppm NO, 55 ppm NO₂, O₂: 10.0%, CO₂: 5.0%, H₂O: 5.0%, N₂-balance: t = 1 min
- Rich:: C₃H₆: 0.33%, CO: 2.0%, O₂: 0.5%, CO₂: 5.0%, H₂O: 5.0%, N₂-balance: t = 10 s.

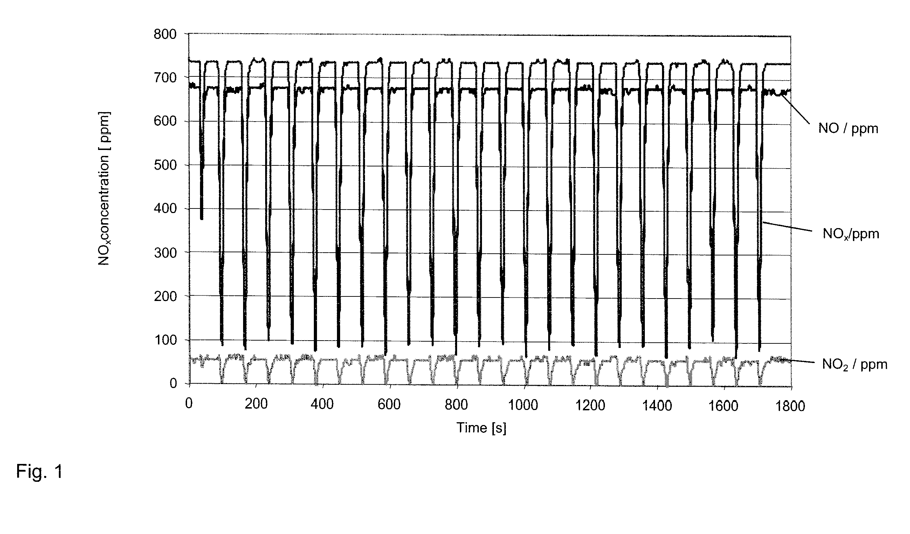

Figure 1 shows the typical NOₓ profiles obtained for such an operation with alternating rich-lean conditions.

The sulphation-desulphation procedure was carried out as follows:
1. Testing of the activity at 300°C under alternate lean/rich cycles with lean conditions for 60 s and rich conditions for 10 s,
2. Sulphation by means of the addition of 300 ppm of SO₂ to the lean reaction mixture and treatment for 2 hours at 300°C (100 mg of S passed per core),
3. Measurement of the activity with alternating cycles (lean 60 s/rich 10 s) without SO₂ at 300 °C after sulphation,
4. Desulphation with a cycle lean 20s/rich 15 s at a furnace temperature range of 500°C to 650°C and renewed testing of the activity at 300°C with a cycle lean 60 s/rich 10 s after each desulphation temperature,
5. Second sulphation by means of the addition of 300 ppm of SO₂ to the lean reaction mixture for 2 hours (180 mg of S per core) and testing of the activity at 300°C with a cycle lean, 60 s/rich 10 s,
6. Desulphation in 5% of H₂/N₂ with a temperature ramp of 7.5°C/min to 700°C and testing of the activity at 300°C with cycles lean 60 s/rich 10 s
7. Desulphation with cycles lean, 20 s/rich 15 s at 600°C and testing of the activity at 300°C with cycles lean 60 s/rich 10 s.

### The water treatment test was carried out in the following way:

The core samples were dipped in water for 30 minutes whereby the water was carefully stirred. The samples were then dried at a temperature of 100°C followed by calcination at 600°C for a period of 1 hour.

### The results obtained using the procedures as described above were as follows:

Table 1 shows the results, obtained for NOₓ conversion, for catalyst samples which contained exclusively platinum as the platinum group component. The testing revealed that only the Pt/praseodymium oxide sample presented a promising result, in which respect its properties to reduce NOₓ, apart from the lowest test temperature of 200°C, were equal to or better than the results obtained for commercial LNT materials. It is found that the Pt/praseodymium sample exhibited effective NOₓ conversion at virtually all temperatures, in which respect the conversion efficiency is only lower at 200°C than that of commercial LNT catalysts.

The Pt catalyst with oxides having very strong basic properties like Ba, Sr, Ca and Lanthanum oxides revealed bad performance at low temperatures, suppressing Pt activity for NO and reductant oxidation, but has shown excellent activity at higher temperatures of 300-400°C. The oxides with moderate basic properties like yttrium and magnesium oxide revealed good activity only at medium temperatures of 300-350°C. The oxides like alumina and zirconium with weak basic properties were not effective at all temperatures. In contrast to some transition metal oxides, namely iron and cobalt oxides and also ceria quite good Pt activation at low temperatures were found and activity was comparable with activity of commercial LNTs. However, these oxides were not able to store NOx effectively at temperatures above 300°C and were in addition too active in reductant (CO and hydrocarbons) oxidation at high temperatures. So as commercial solutions typically contain ceria, we can conclude based on comparison of commercial LNTs and model samples presented in Table 1, that the addition of ceria is allowing catalyst manufacturers to increase the activity of Ba-containing formulations at low temperatures, but it leads to lower performance at higher temperatures. The addition of Rh had the same effect of increasing the activity at low temperature and decreasing activity at high temperatures but not to a so significant amount. As a result the performance of commercial LNTs at high temperatures was not impressive and many model catalysts presented in Table 1 had better performance at high temperatures.

In that respect the present invention is based on the realisation that praseodymium oxide having the chemical formula Pr₆O₁₁ (corresponding to Pr₂O₃ * 4 PrO₂) has comparable properties to Pr₂O₃ (and thus lanthanum oxide = La₂O₃) and in that respect additionally contains PrO₂ (the properties of which are comparable to those of CeO₂).

The praseodymium oxide therefore just like cerium can activate the platinum at low temperatures (even if with a lower level of efficiency), but it can be simultaneously in a lower valence state in comparison to cerium. Pr₂O₃ has strong basic properties similar to lanthanum oxide which provides good performance at high temperatures. Those features provide good activity both at low and also at high temperatures, in which respect, in contrast to cerium, the efficiency or NOₓ conversion does not decrease at high temperatures. The good activity of the Pt/praseodymium oxide sample was observed in a wide range of values with respect to the praseodymium loading. A higher loading gave a better NOₓ conversion efficiency at higher temperatures, but with an excessively high loading the NOₓ conversion efficiency decreased at low temperatures. The LNT catalyst presented by this invention is thus distinguished by excellent activity in respect of NOₓ reduction at high temperatures, whilst platinum activity at lower temperatures is less impaired in comparison for example with barium-bearing metal oxides or other alkaline-earth metal oxides. It is valuable to notice, that lanthanum oxide has shown the second ranking of performance with excellent activity in NOₓ reduction at high temperature and it did not suppressed Pt activity at low temperatures so strongly as Ba and other alkaline-earth metal oxides.

**Table 1:**

| **Catalyst composition** | **NOₓ conversion [%]** | | | | |
|---|---|---|---|---|---|
| | **T=200°C** | **T=250°C** | **T=300°C** | **T=350°C** | **T=400°C** |
| Reference A comm. LNT (100 Pt/10 Rh)-Ba-Ce | 53 | 90 | 84 | 78 | 67 |
| Reference B comm. LNT (100 Pt/10 Rh)-Ba-Ce | 35 | 87 | 95 | 85 | 74 |
| 85 Pt/BaO | 8 | 30 | 77 | 96 | 98 |
| 85 Pt/CaO | 11 | 33 | 89 | 95 | 92 |
| 85 Pt/La₂O₃ | 22 | 76 | 93 | 94 | 90 |
| 85 Pt/Y₂O₃ | 17 | 55 | 87 | 82 | 72 |
| 85 Pt/MgO | 18 | 57 | 84 | 72 | 34 |
| 85 Pt/CeO₂ | 53 | 63 | 58 | 35 | 8 |
| 85 Pt/Co₃O₄ | 41 | 52 | 48 | 22 | 4 |
| 85 Pt/Fe₂O₃ | 54 | 59 | 44 | 23 | 4 |
| 85 Pt/Al₂O₃ | 20 | 39 | 39 | 18 | 2 |
| 85 Pt/ZrO₂ | 12 | 46 | 45 | 32 | 7 |
| 85 Pt/Pr₆O₁₁ 1.0 mmol Pr/core | 17 | 80 | 90 | 93 | 77 |
| 85 Pt/Pr₆O₁₁ 1.2 mmol Pr/core | 25 | 89 | 91 | 93 | 78 |
| 85 Pt/Pr₆O₁₁ 1.5 mmol Pr/core | 28 | 91 | 94 | 95 | 81 |
| 85 Pt/Pr₆O₁₁ 1.8 mmol Pr/core | 23 | 81 | 96 | 95 | 84 |

Table 2 shows the results of the endeavour to improve the activity of the Pt/Pr₆O₁₁ sample by means of the addition of a second oxide to praseodymium. In that respect no improvement was noted and typically even negative effects were found.

The addition of cerium admittedly improved activity at low temperatures of 200°C but worsened significantly NOₓ conversion at higher temperatures. Thus it was possible to confirm the known good conversion efficiency of a Pt/Pr-Ce catalyst at low temperatures, but that catalyst does not have a satisfactory level of NOₓ conversion efficiency in the entire temperature range for diesel engine applications. The reduction in conversion efficiency at high temperatures was significant even with a small addition of cerium, which can be explained by virtue of the fact that the addition of cerium promotes the transition of praseodymium ions from the + 3-state to the + 4-state so that the properties become similar to those of CeO₂ which as shown in Table 1 has a low level of efficiency in NOₓ reduction at high temperatures.

Oxides of barium and strontium improved activity at high temperatures, but activity at low temperatures was suppressed. Other tested oxides including yttrium had a negative effect. A positive effect on NOₓ conversion at high temperatures was found only for the praseodymium-lanthanum system whereas activity at low temperatures was not worsened or suppressed by the lanthanum. That effect was found however only for a relatively low lanthanum loading. In contrast a lanthanum oxide-praseodymium oxide ratio of more than 1/3 led to a negative effect in the range of 200°C to 250°C. When the praseodymium was replaced by lanthanum to an extent of more than 50% the activity achieved was the same as that of Pt/lanthanum.
The perfect and unlimited solid solutions are known for praseodymium lanthanum mixed oxides due to their close ionic radiuses.

**Table 2:**

| **Catalyst composition** | **NOₓ conversion [%]** | | | | |
|---|---|---|---|---|---|
| | **T=200°C** | **T=250°C** | **T=300°C** | **T=350°C** | **T=400°C** |
| Reference A LNT (100 Pt/10 Rh)-Ba-Ce | 53 | 90 | 84 | 78 | 67 |
| Reference B LNT (100 Pt/10 Rh)-Ba-Ce | 35 | 87 | 95 | 85 | 74 |
| Pt/Pr₆O₁₁ 1.5 mmol Pr/core | 28 | 91 | 94 | 95 | 81 |
| Pr/Pr-Ce 1.35 mmol Pr, 0.15 mmol Ce | 48 | 88 | 81 | 83 | 66 |
| Pt/Pr-Ce 1.0 mmol Pr, 0.5 mmol Ce | 60 | 82 | 85 | 74 | 57 |
| Pt/Pr-La 1.2 mmol Pr, 0.3 mmol La | 30 | 90 | 96 | 94 | 86 |
| Pt/Pr-La 1.0 mmol Pr, 0.5 mmol La | 24 | 85 | 94 | 94 | 89 |
| Pt/Pr-Sr | 22 | 80 | 97 | 98 | 92 |
| Pt/Pr-Ba | 19 | 54 | 87 | 94 | 96 |
| Pt-Pr-Y | 27 | 86 | 93 | 93 | 76 |
| Pt-Pr-Mg | 29 | 65 | 89 | 90 | 74 |
| Pt-Pr-Co | 26 | 83 | 90 | 90 | 60 |

In addition it was surprisingly found that the activity of the praseodymium-based LNT catalyst could be substantially increased at low temperatures if platinum was substituted by palladium. Typically the addition of palladium results in a reduction in conversion and activity of alkaline earth-bearing oxides such as barium oxide. However, as can be seen from Table 3, the opposite effect could be achieved for praseodymium or praseodymium lanthanum as basic LNT material. The NOₓ conversion achieved for Pt-Pd/Pr₆O₁₁ and Pt-Pd/Pr-lanthanum oxide was higher in all tested temperature ranges including the low-temperature range than for commercial LNT catalysts with a higher Pt loading and expensive rhodium (Rh) in operation with alternating lean/rich conditions. Furthermore the substitution of platinum by palladium is found to be advantageous insofar as palladium is substantially less expensive than platinum or in particular rhodium. The overall costs of the system can thus be substantially reduced by replacing expensive rhodium and reducing the platinum loading.

The effect of the addition of palladium is similar to that of the addition of rhodium, in which respect for example the addition to a platinum-LNT catalyst leads to a higher level of activity at low temperatures with an only slight reduction in the NOₓ conversion rate at higher temperatures. The addition of small amounts of palladium to Pt/Pr₆O₁₁ and Pt-/Pr-La oxide had no substantial effect. However, comprehensive substitution with a Pd/Pt ratio of more than 50% by weight the activity of the Pt-Pd/Pr₆O₁₁ obtained exceeded the activity of commercial LNT catalysts at T = 200°C. As can be seen from Table 3 the best results for LNT catalysts were obtained with a platinum content of 60% to 47% (and thus a palladium content of 40% to 53%). An excessive Pd loading however resulted in a worsening of activity at high temperatures, in which respect in particular a catalyst provided with palladium only had a poor level of conversion efficiency. The partial substitution of praseodymium by lanthanum resulted in a slight improvement in conversion efficiency at 400°C while activity was comparable at the other temperatures.

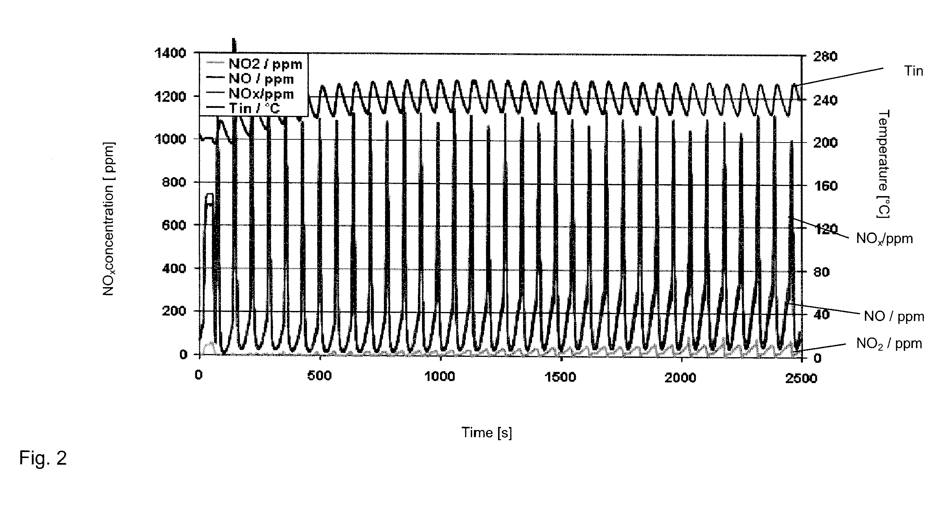

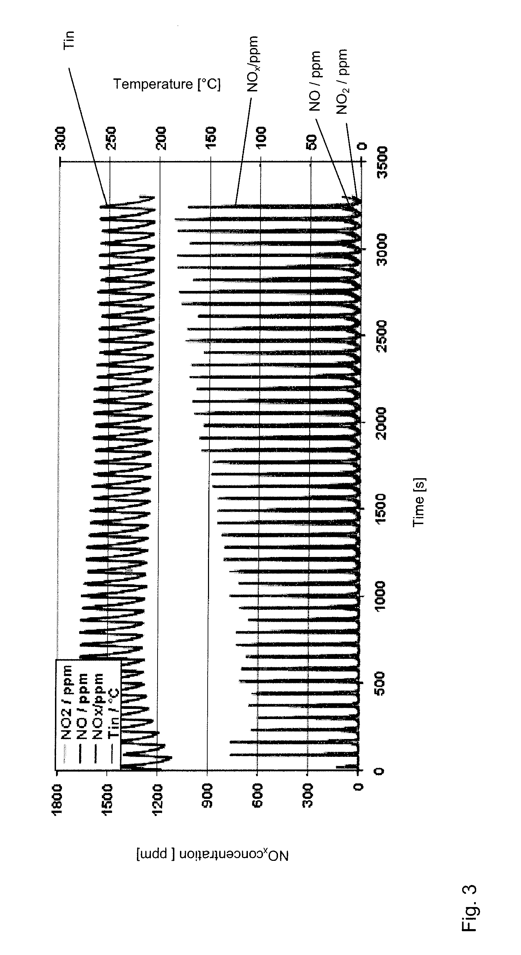

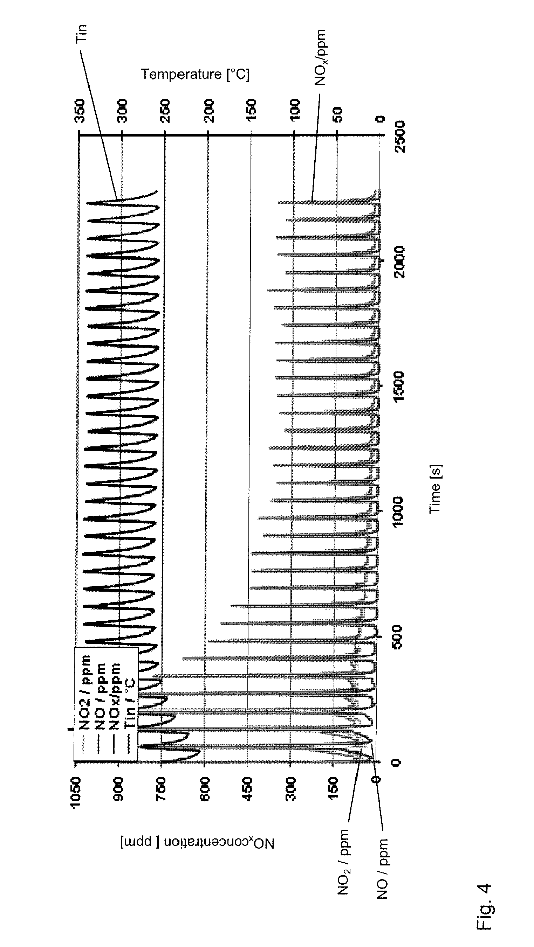

Figures 2 to 4 show the test results in comparison with commercial Pt-Rh/Ba-Ce catalysts. As can be seen from Figures 2 and 3 the Pt-Pd/Pr₆O₁₁ catalyst exhibits a slightly better level of NOₓ reduction under rich conditions and better NOₓ storage under lean conditions and thus better NOₓ conversion of 68% (in comparison with 53%) at a temperature of 200°C. The Pt-Pd catalyst on a praseodymium or praseodymium-lanthanum basis showed an efficient NOₓ reduction under rich conditions and excellent NOₓ storage under lean conditions at 250°C, as is shown in Figures 4, which leads to a NOₓ conversion of more than 90%.

**Table 3:**

| **Catalyst composition** | **NOₓ conversion** | | | **[%]** | |
|---|---|---|---|---|---|
| | **T=200°C** | **T=250°C** | **T=300°C** | **T=350°C** | **T=400°C** |
| Reference A LNT (100 Pt/10 Rh)-Ba-Ce | 53 | 90 | 84 | 78 | 67 |
| Reference B LNT (100 Pt/10 Rh)-Ba-Ce | 35 | 87 | 95 | 85 | 74 |
| 85 Pt/Pr₆O₁₁ 1.5 mmol Pr/core | 28 | 88 | 90 | 95 | 81 |
| 75 Pt/10 Pd/Pr₆O₁₁ | 30 | 89 | 89 | 94 | |
| 65 Pt/20 Pd/Pr₆O₁₁ | 34 | 88 | 92 | 96 | 80 |
| 60 Pt/35 Pd/Pr₆O₁₁ | 42 | 93 | 93 | 94 | 79 |
| 55 Pt/30 Pd/Pr₆O₁₁ | 46 | 90 | 97 | 95 | 78 |
| 50 Pt/35 Pd/Pr₆O₁₁ 1.0 mmol Pr (Example 1) | 68 | 89 | 92 | 92 | 78 |
| 50 Pt/35 Pd/Pr (1.2 mmol)-La (0.3 mmol) (Example 2) | 69 | 92 | 95 | 93 | 82 |
| 45 Pt/40 Pd/Pr-La | 66 | 90 | 93 | 94 | 80 |
| 45 Pt/40 Pd/Pr₆O₁₁ | 66 | 89 | 91 | 93 | 75 |
| 40 Pt/45 Pd/Pr (1.2 mmol)-La (0.3 mmol) | 69 | 90 | 93 | 93 | 79 |
| 35 Pt/50 Pd/Pr₆O₁₁ | 65 | 90 | 94 | 93 | 73 |
| 30 Pt/55 Pd/Pr₆O₁₁ | 61 | 84 | 90 | 91 | 73 |
| 20 Pt/65 Pd/Pr₆O₁₁ | 52 | 75 | 85 | 84 | 69 |
| 85 Pd/Pr₆O₁₁ | 17 | 51 | 73 | 72 | 66 |

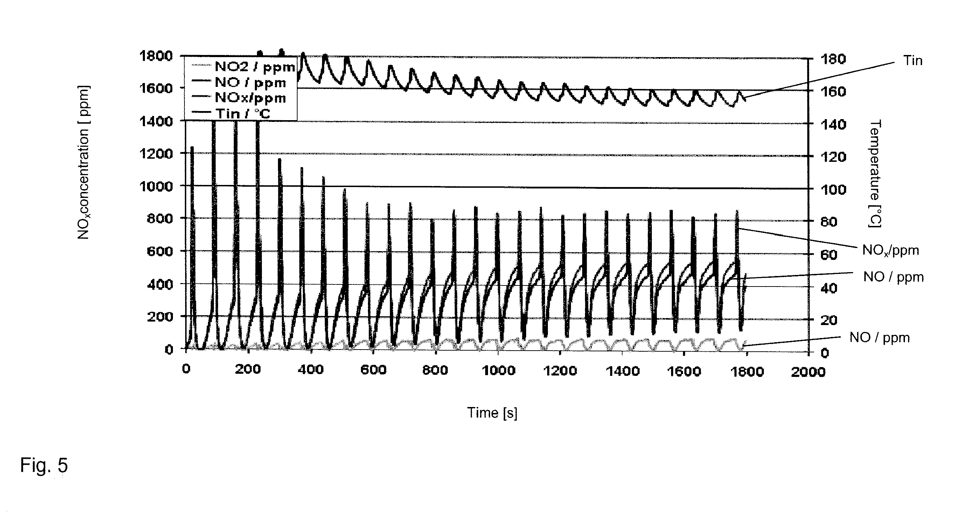

In the next step small amounts of rhodium were added to the Pt/praseodymium or the Pt/praseodymium-lanthanum oxide catalyst. With the addition of small amounts of less than 2.5 g/ft³, which is less than ¼ of the rhodium loading typically found with commercial catalyst compounds (usually 10 to 20 g/ft³), there was a similar increase in activity at low temperatures as for the above-described Pt/Pd samples, wherein the catalyst still had good conversion at high temperatures and a good NOₓ storage capacity at high temperatures, wherein those values were higher than with commercial LNT catalysts. As can be seen from Table 4, Example 3, excellent NOₓ reduction was achieved at a temperature range of 200°C to 250°C, wherein a NOₓ conversion rate of 78% was achieved at 200°C and 96% at 250°C. It will be noted however that as shown in Table 4 the higher rhodium loading did not lead to a further improvement in activity. A similar effect was found for the addition of rhodium to the Pt/Pr-La catalyst for which an increased activity was achieved in NOₓ reduction in the low-temperature range. The NOₓ reduction in the temperature range of 200°C to 250°C was slightly lower than for Pt/ Rh/Pr₆O₁₁ but was better at 300°C to 400°C. In contrast thereto the addition of rhodium to the Pt-Pd LNT catalyst did not lead to an improvement in conversion efficiency compared to those Pt-Pd samples exhibiting a good low-temperature performance as shown in Table 3. The Pt-Rh/praseodymium catalyst, as shown in Figure 5, still has a good NOₓ conversion of 30% even at 150°C. At such low temperatures, in the lean mode, by virtue of the low level of activity in respect of the oxidation of NO to NO₂, it was difficult to effectively store NOₓ, because NO₂ is always absorbed more strongly and more efficiently than NO. Nonetheless the catalyst still presented a certain NOₓ storage capability even in lean mode and still presented a certain NOₓ reduction in rich operating phases.

**Table 4:**

| **Catalyst composition** | **NOₓ conversion [%]** | | | | |
|---|---|---|---|---|---|
| | **T=200°C** | **T=250°C** | **T=300°C** | **T=350°C** | **T=400°C** |
| Reference A LNT (100 Pt/10 Rh)-Ba-Ce | 53 | 90 | 84 | 78 | 67 |
| Reference B LNT (100 Pt/10 Rh)-Ba-Ce | 35 | 87 | 95 | 85 | 74 |
| 85 Pt/2.3 Rh/Pr₆O₁₁, Pr-loading, 1.5 mmol, Example 3 | 78 | 96 | 94 | 92 | 78 |
| 85 Pt/8.5 Rh/Pr₆O₁₁, Pr-loading 1.5 mmol | 79 | 92 | 91 | 86 | 71 |
| 85 Pt/2.3 Rh/Pr-La, Pr 1.2 mmol, La 0.3 mmol, Example 4 | 72 | 93 | 96 | 95 | 81 |
| 40 Pt/45 Pd/2.3 Rh/Pr-La, Pr 1.2 mmol, La 0.3 mmol | 70 | 90 | 93 | 90 | 76 |

The endeavours to further improve the NOₓ conversion in the low-temperature range led to the development of a new process for the production of the LNT catalyst.

The basic contradiction for low-temperature activity is that basic oxides are necessary to keep stored NOₓ as nitrate, but simultaneously such oxides suppress the activity of platinum in NO oxidation and NOₓ reduction that reduces low-temperature activity. The idea of the method is to treat preliminary samples with deposited basic oxide at high temperatures to provide good interaction and reaction with alumina. Such interaction leads to decreased basic properties and should not suppress so much the Pt activity at low temperatures. According to this method, the cores containing impregnated praseodymium nitrate or a mixture of praseodymium and lanthanum nitrate were calcined at 900C for 1.5h. Such obtained core samples were colourless and the dark-brown colour of praseodymium oxide completely disappeared indicating a reaction with alumina with the formation of surface PrAlO₃ or Pr (La)AlO₃ compounds. A big excess of citric acid was used. Alumina is slightly soluble in citric acid and it provides the better interaction between alumina and basic oxide. As next step the noble metal component (components) was (were) added with following drying and final calcinations. In this case citric acid was not used to avoid the dissolution of basic oxide (Pr or Pr- La), and urea was added instead to provide homogeneous noble metal component (components) precipitation. Such interaction with alumina decreases the performance at high temperatures, but provides excellent low-temperature activity strongly exceeding the activity of commercially available LNT samples.

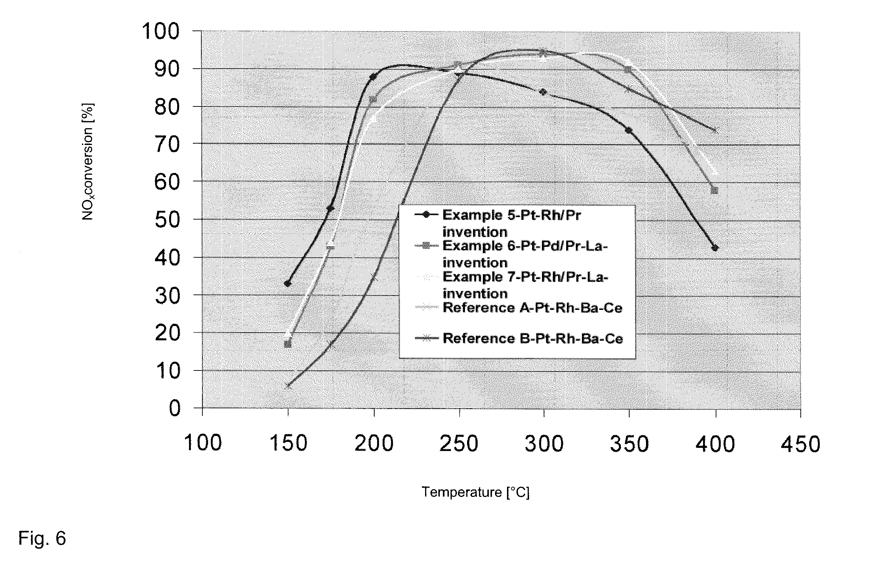

Figure 6 shows the corresponding results including low-temperature NOₓ reduction at 150°C to 175°C. The Pt-Rh/praseodymium oxide LNT catalyst showed the best properties at low temperatures, in which respect at 175°C it presented a NOₓ conversion of 53% and at 150°C it presented a NOₓ conversion of 33% whilst the best of the commercial samples achieved a conversion of 53% only at 200°C. Such low-temperature activity is important in particular in Diesel engine applications as for example the average temperature in the European NEDC drive cycle is only 150°C. Pt-Rh/Pr-La oxide and Pt-Pd/Pr-La oxide samples which were prepared with the process according to the invention also showed good low-temperature activity which exceeded the activity of catalysts which were prepared with the conventional process (see Examples 1 to 3) and gave better NOₓ reduction at high temperatures. Generally the NOₓ conversion at 400°C was typically lower for all catalysts prepared with the process according to the invention, which is to be attributed to the less pronounced basic properties of the basic oxide after high-temperature calcination in comparison with the samples produced without such calcination operations. Nevertheless, for the catalysts produced by means of the process according to the invention, the NOₓ conversion rate was excellent at 350°C and with 90% exceeded those of Rh/Pr-La oxide and Pt-Pd/Pr-La oxide, as can be clearly seen from Figure 6. The catalysts prepared by means of the process according to the invention are thus highly promising for the entire temperature range which is relevant for Diesel operated vehicles. High-temperature calcination of an aluminium oxide carrier together with the basic oxide is also advantageous for the high-temperature stability of the LNT catalyst.

Furthermore the Pt-Rh/praseodymium catalyst in accordance with Example 3 was also tested in respect of sulphation and desulphation in comparison with commercial catalysts, the results obtained in that case being shown in Table 5.

Sulphation in the presence of SO₂ led to deactivation of both catalysts, with a similar activity resulting after sulphation for two hours. It will be noted however that the Pt-Rh/praseodymium catalyst had substantially better properties after processing or desulphation. In desulphation during lean/rich cycles the temperature observed with the commercially available reference sample was substantially higher, which is to be attributed to the presence of cerium (which has a greater oxygen storage capacity in the commercially available samples). The temperature recorded in the commercially available core sample was up to 100°C higher than the nominal furnace temperature while the difference was below 50°C for the Pt-Rh/praseodymium sample. That means that the commercially available sample, at the same nominal oven temperature, had a higher real temperature and thus a greater possibility of desulphation. Nevertheless the Pt-Rh/praseodymium sample had better recovery of activity in NOₓ reduction in comparison with the commercially available sample at all temperatures in spite of the lower real temperature.

After sulphation in lean/rich cycles at 600°C the sample practically recovered its activity and desulphation at 650°C resulted only in a slight increase in activity to the level prior to sulphation. In contrast thereto, even with desulphation at 650°C, with the commercially available sample, it was not possible to achieve complete recovery, which can be attributed to thermal deactivation of the Ba-containing catalyst. Remarkably the Pt-Rh/praseodymium catalyst had an actual temperature which was up to 50°C lower than that of the commercially available sample during desulphation at the same furnace temperature. In actual fact therefore for the catalyst according to the invention regeneration was achieved at a temperature of the core of 650°C whereas complete regeneration was not achieved with the commercial sample at 745°C. The lower temperature increase during the rich operating phase decreased the possibility of thermal deactivation in the case of the according to the invention.

Another mode of desulphation using hydrogen with a temperature ramp of up to 720°C showed the same result, in which case Pt-Rh/praseodymium oxide exhibited a release of sulphur in the form of H₂S at substantially lower temperatures and after a shorter time in comparison with commercially available samples.

At very high temperatures of more than 700°C commercially available samples exhibited the release of a substantial amount of sulphur compounds, as the presence of such strongly bonded sulphur species leads to difficult and incomplete recovery even at high temperatures. The sample according to the invention containing praseodymium was in contrast to that completely regenerated again. While at a temperature of 300°C the original NO reduction was 94%, a NOₓ reduction of 91% and 92% respectively was found after two successive desulphation operations. It is to be noted in this respect that the amount, determined by way of H₂S liberation, of the amount of sulphur stored in the Pt-Rh/praseodymium catalyst was substantially lower, which leads to easier desulphation of that catalyst in comparison with commercially available samples. In addition even after desulphation by means of hydrogen the commercially available catalyst still had more than half the sulphur, as was demonstrated by chemical analysis. The good and practically complete recovery of the Pt-Rh/praseodymium oxide catalyst indicates the possibility of desulphation thereof without any loss of activity and also indicates a good thermal stability of that catalyst in comparison with commercially available catalysts.

**Table 5:**

| **Catalyst composition** | **Activity, fresh** **NOₓ [%]** | **Activity after sulphation, 300 ppm SO₂, 2h at 300°C** | **Activity after desulphation, 20s/15s at furnace temp. 500°C, 1 h** | | **Activity after desulphation, 20s/15s at furnace temp. 550°C, 1 h** | | **Activity after desulphation, 20s/15s at furnace temp. 600°C, 45 min** | | **Activity after desulphation, 20s/15s at furnace temp. 650°C, 30 min** | | **Activity after desulphation 5% H2/N2** | **S mg/core estimated with 5% H2/N2 desulphation** |
|---|---|---|---|---|---|---|---|---|---|---|---|---|
| | | | **T in**,** °C | **NOₓ, % T in, °C** | | NOₓ, % | **T in, °C** | NOₓ, % | **T in, °C** | NOₓ, % | NOₓ, % | |
| **Commercial Pt-Rh sample Reference A** | 84 | 11 | 564- 591 | 19 | 614-644 | 46 | 664-696 | 69 | 710-745 | 77 | 42* | 197.0 |
| **Pt-Pd- Rh/Pr₆O₁₁** | 94 | 10 | 543- 558 | 30 | 595-605 | 61 | 640-650 | 85 | 692-697 | 92 | 91 | 58.5 |

| | | | | | | | | | | | | |
|---|---|---|---|---|---|---|---|---|---|---|---|---|
| * after additional treatment in lean/rich cycles at 600°C NOₓ conversion was improved to 72% at 300°C ** first temperature is the lowest temperature which was ascertained for the core sample in lean operating phases; second temperature is the highest temperature during rich operating phases. | | | | | | | | | | | | |

In addition the influence of a treatment with water on the activity of the catalyst according to the invention and commercially available barium-containing catalysts was also investigated as that water treatment is problematical in relation to barium-containing mixtures. The samples were dipped into water, the activity prior to and after that treatment being measured. The results are set out in Table 6.

**Table 6:**

| **Catalyst composition** | **NOₓ conversion rate [%]** | | | | |
|---|---|---|---|---|---|
| | **T=200°C** | **T=250°C** | **T=300°C** | **T=350°C** | **T=400°C** |
| Reference A LNT (100 Pt/10Rh)-Ba-Ce before water treatment After water | 53 | 90 | 84 | 78 | 67 |
| treatment | 57 | 75 | 79 | 71 | 60 |
| | | | | | |
| 85 Pt/2.3 Rh/Pr₆O₁₁, Pr-loading 1.5 mmol Example 3 before water treatment After water | 78 | 96 | 94 | 92 | 78 |
| treatment | 79 | 94 | 93 | 93 | 80 |

As will be apparent from Table 6 the water treatment had no detrimental or noticeable effect on the performance of the praseodymium-bearing catalyst in accordance with the invention, the results being the same taking into account possible measurement errors. In contrast the properties of commercially available LNT samples were changed by the water treatment. The NOx reduction even rose at low temperatures of 200°C, which is thought to be attributed to the lower barium concentration on the surface and the effect, which is less therewith, of suppressing Pt activity, whereas water-insoluble cerium remains on the surface and thus leads to better activation of Pt. At all other investigated temperatures however the conversion efficiency was lower, which indicates a deterioration of the LNT performance of the commercially available samples after the water treatment.

## Claims

1. A LNT catalyst suitable as a NOₓ storage and reduction catalyst comprising a platinum group metal component and a metal oxide component,
**characterised in that**
the metal oxide component contains exclusively praseodymium oxide (Pr₆O₁₁) or praseodymium-lanthanum oxide.

2. A LNT catalyst according to claim 1
**characterised in that**
the molar proportion of lanthanum in the praseodymium-lanthanum oxide is a maximum of 50%.

3. A LNT catalyst according to claim 2
**characterised in that**
the molar proportion of lanthanum is in the range of 20% to 30%.

4. A LNT catalyst according to one of claims 1 to 3
**characterised in that**
the platinum group metal component contains platinum-palladium, platinum-rhodium or platinum-palladium-rhodium.

5. An exhaust gas cleaning apparatus, in particular a diesel oxidation catalyst (DOC) or diesel particulate filter (DPF) or LNT (Lean-NOₓ trap) device
**characterised in that**
it has a LNT catalyst according to one of the preceding claims.

6. A process for the production of a LNT catalyst wherein the LNT catalyst is produced from a platinum group metal component and a metal oxide component,
**characterised in that**
during said production the high-temperature calcination of the metal oxide component is carried out prior to addition of the platinum group metal component.

7. A process according to claim 6
**characterised in that**
the high-temperature calcination of the metal oxide component is carried out at a temperature range of 880°C to 950°C, preferably at about 900°C.

8. A process according to claim 6 or claim 7
**characterised in that**
the impregnation with the metal oxide component precursor is carried out in the presence of excess of citric acid followed by high temperature calcination.

9. A process according to one of claims 6 to 8
**characterised in that**
after the high-temperature calcination the platinum group metal component is added in the presence of urea.

10. A process according to one of claims 6 to 9
**characterised in that**
the metal oxide component contains exclusively praseodymium oxide (Pr₆O₁₁) or praseodymium-lanthanum oxide.

11. A process according to one of claims 6 to 10
**characterised in that**
the platinum group metal component contains platinum-palladium, platinum-rhodium or platinum-palladium-rhodium.
